# EUROPEAN PATENT SPECIFICATION

(11) **EP 1 587 357 B1**
(45) Date of publication and mention of the grant of the patent: **25.10.2006**
(21) Application number: 04704688.3
(22) Date of filing: 23.01.2004
(51) Int. Cl.: A01D 34/416

(54) **A CUTTING HEAD FOR A BRUSH CUTTER, EDGE TRIMMER OR SIMILAR**
SCHNEIDKOPF FÜR BUSCHMÄHER, KANTENTRIMMER ODER DERGLEICHEN
TETE DE COUPE POUR UNE DEBROUSSAILLEUSE, POUR UN TAILLE-BORDURES OU ANALOGUE

(30) Priority: 23.01.2003 FR 0300711
(43) Date of publication of application: 26.10.2005
(73) Proprietor: SPEED FRANCE, 69400 Arnas (FR)
(72) Inventor: LEGRAND, Emmanuel, F-01480 Villeneuve (FR)
(74) Representative: Le Forestier, Eric
(86) International application number: PCT/IB2004/000777
(87) International publication number: WO 2004/064493

(56) References cited:
- EP-A- 1 088 476
- US-A- 4 282 653
- US-A- 4 756 146
- US-A- 5 761 816
- US-A- 6 032 442

## Description

The present invention concerns in general the field of devices for cutting plants, such as brush cutters, edge trimmers, etc.

In this type of device, one or more cutting strings, progressively unwound from a reserve or in the form of individual strands, are solidly attached to a cutting head driven in rotation by a motor driving the device, while extending substantially radially in relation to the axis of rotation.

In general, when several strings are fitted to the cutting head, their outlets all extend at a same level, that is to say that the axes of the said outlets are all contained in a plane perpendicular to the axis of rotation of the head.

The consequence thereof is a trajectory of the cutting strings substantially on a single plane and good quality chopping.

There have also been developed cutting heads with several cutting strings, in which the axes of the different string outlets are contained in at least two planes different from one another, that is to say that they are situated at levels different from the axis of rotation of the head.

Particular mention will be made of documents US-A-4 905 465, NL-A-83 02111, US-A- 6032442 and US-A-5 048 278.

Certain of these documents state that such an arrangement of several cutting strings makes it possible to improve the cut and to promote the chopping of the plants.

Following tests carried out by the Applicant, it has been discovered that in certain cases the chopping of the plants could be improved.

Thus the present invention aims to propose a cutting head with several levels of cutting strings, which has a superior chopping effect.

In this regard, a certain number of techniques are known for locking the string.

One of these techniques relies upon a mobile locking element, such as a cam, which is acted upon by a spring and/or by the centrifugal force generated during the rotation of the head to exert a pressure on the string, a bearing counter-surface being provided opposite the locking element to trap the string locally between the element and the bearing surface. The documents US-A-4 301 642, US-A-4 335 510 and EP-A-0 824 854 give examples of these techniques.

To improve the locking effect, it is also known to provide on the locking element a series of teeth capable of a better anchoring with the material (usually a polyamide) of the string.

Despite these provisions, it sometimes happens that the retention of the string in the head is not achieved with sufficient effectiveness. In such a case, traction forces exerted on the string, particularly when the cutting encounters obstacles or particularly hard or bushy plants, may cause the string to move relative to the locking device, and possibly (in the case of strands of string) slide out of the head.

This disadvantage may moreover occur all the more easily when the string is implemented, totally or partially, of hard materials (such as a special or stressed polyamide), and/or when the string has a section such that the contact between the string and the locking element is not good.

The present invention aims to overcome these limitations of the state of the art and to propose an improved string lock.

To this end, the present invention provides a cutting head for a brush cutter, edge trimmer or similar, of the type comprising a plurality of string outlets for a plurality of cutting strings, characterized in that the axes of the cutting string outlets are distributed in at least two planes mutually spaced by a distance greater than or equal to approximately 1.8 times the height of each string, in that in each plane the respective string outlets are at the same level, and in that in all planes the direction of rotation of the head is the same.

Certain preferred, but non-limitative, aspects of this cutting head are:
* the at least two planes are mutually spaced by a distance less than or equal to approximately 5 times the height of each string.
* in the peripheral direction of the head, the strings exiting in a first plane are alternated with the strings exiting in a second plane adjacent to the first.
* in the peripheral direction of the head, the strings exit the head in a regularly distributed manner.
* two strings are provided exiting in a first plane in diametrically opposed regions, and two strings exiting in a second plane adjacent to the first, in diametrically opposed regions also, and the string outlets are distributed approximately every 90° in the peripheral direction.
* each string has a ridge, and the head comprises means for maintaining each string in an orientation such that its cutting ridge is in a position to lead the attack on the plants.
* each string has a substantially square section and is oriented with two opposite ridges situated substantially in the plane containing the axis of the corresponding string outlet.
* the head is implemented by assembling parts of general disc shape defining string semi-channels opposite one another and suitable for together forming string channels concealed in the head.
* the spacing between the planes of the string outlets is defined by the thickness of an intermediate part comprising on one face semi-channels for the strings of an upper plane and on an opposite face semi-channels for the strings of a lower plane.

The invention also provides a vegetation cutting device such as a brush cutter, edge trimmer or similar, characterized in that it comprises a cutting head as defined above and a motor suitable for driving said head in rotation.

Other aspects, aims and advantages of the present invention will appear more clearly from the following detailed description of the preferred embodiments of the latter, given by way of non-limitative example and made with reference to the appended drawings in which:
Figures 1 to 3 are three views in side elevation illustrating a cutting head according to one embodiment of the invention.
Figure 4 is a plan view of a generally disc-shaped part constituting a portion of a cutting head according to the invention.
Figure 5 is a profile view of two disc-shaped parts assembled to form the cutting head.
Figure 6 is a profile view of a generally disc-shaped intermediate part that can, with two other parts, form another cutting head according to the invention.
Figure 7 is a profile view of this other cutting head in the assembled state.
Figure 8 is a schematic plan view of the cutting head in Figure 7, with four strands of cutting string mounted in the latter.
Figure 8A shows in perspective a curved bearing zone defined by the cutting head for one of the strands.
Figure 9 illustrates a detail of the disc-shaped part in Figure 4, fitted with a device for locking a strand of string.
Figure 10 is a view in cross-section along the line x-x in Figure 9.
Figure 11 is a cross-sectional view of a first variant of embodiment of the string locking device.
Figure 12 is a view in perspective of a locking member belonging to the locking device in Figure 11.
Figure 13 is a cross-sectional view of a second variant of embodiment of the string locking device.
Figure 14 is a cross-sectional view of a third variant of the string locking device.
Figure 15 is a plan view of a fourth variant of the string locking device, and
Figure 16 is a view in section along the line XVI-XVI in Figure 15.

It will be noted as a preliminary matter that, from one figure to the other, the identical or similar elements or parts have, wherever possible, been identified by the same reference marks.

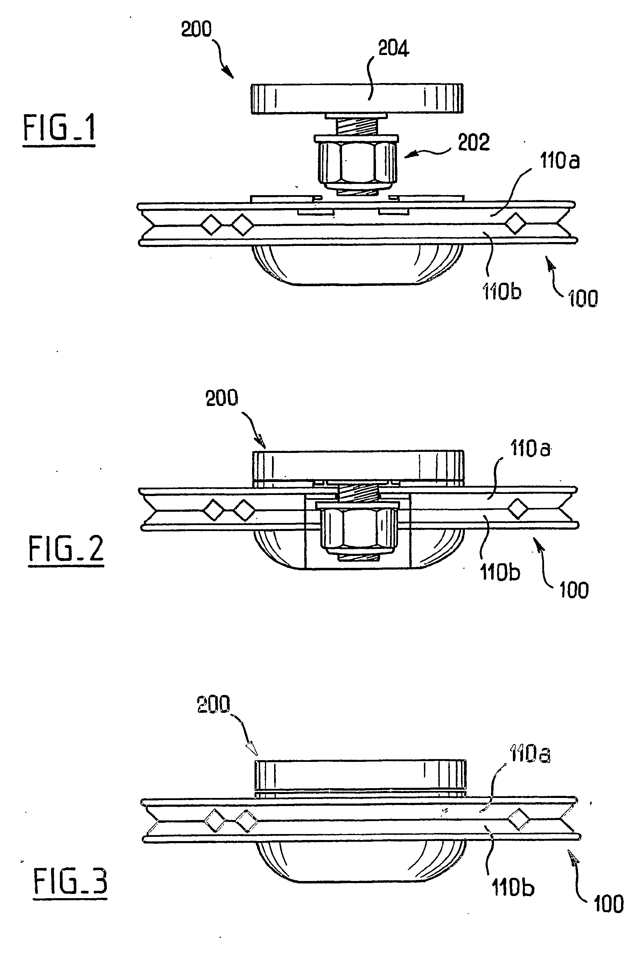

Figures 1 to 3 represent a cutting head for a brush cutter, edge trimmer and similar according to the invention, globally identified by the reference 100, suitable for being mounted on the extremity of a drive shaft 200 provided for the purpose, fixing arrangements 202 (washer, nut, mechanism of indexation in rotation), as well as a counterplate intended to cooperate with the said fixing arrangements in a manner completely conventional in itself.

The cutting head is implemented here by overlaying and assembling two disc-shaped parts 110a and 110b concentric with the axis of rotation of the drive shaft 200 and comprising, on their faces turned one towards the other, arrrangements for running of strands of string and for retaining those strands as will be seen in detail below.

Figure 1 illustrates the cutting head 100 before assembly to the shaft 200, whereas Figures 2 and 3 illustrate, respectively in a view with partial cutaway and a view in elevation, the cutting head mounted on the shaft.

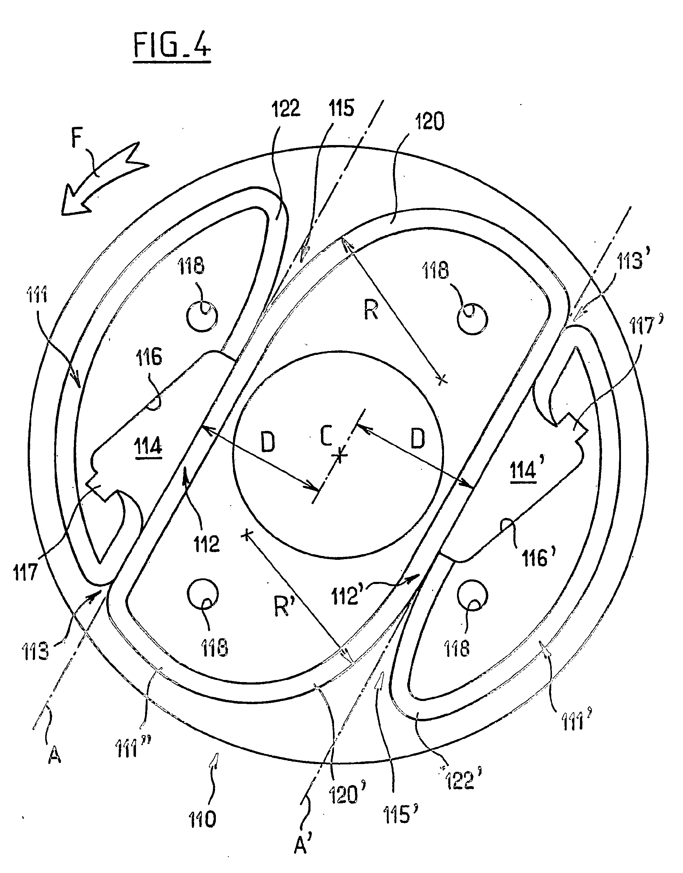

With reference now to Figure 4, this shows a disc-shaped part 110 (possibly one of the parts 110a and 110b in Figures 1 to 3) contributing to the implementation of the cutting head. It is provided with a central orifice 1100 through which the drive shaft 200 can pass.

This part 110 comprises a set of 45° bevels 111, 111' (outer bevels) and 111'' (central bevel) delimiting internally the portions of the part that are raised and externally the portions of the part that are recess. The overall contour of the bevels is here circular and follows the contour of the disc, set back at a certain distance from this contour.

In particular, two bevels 111, 111'' extend in a rectilinear and adjacent manner the one to the other to delimit a first zone 112 of cutting string strand passageway, this passageway opening onto the outside at a first opening 113 and a second opening 115, for the outlet of a strand of a cutting string. The axis A along which the zone 112 extends is situated a certain distance, marked D, from the centre C of the disc-shaped part.

At the opening 113, the radius of curvature of the bevels is small, it being simply to guide the strand of string when it is put in place.

At the string outlet 115, the bevel 111'' defines a curved bearing zone 120, connected for preference without change of slope on the one hand with the string passageway zone 112 and on the other hand with the circular peripheral zone formed jointly by the three bevels. This curved bearing zone 120 supports the strand of string during cutting, in particular when, when the cutting head rotates, it encounters obstacles resisting cutting and causing it to give way (the direction of rotation of the cutting head being given by the arrow F). It is important to note here, according to one aspect of the invention, that, due to the lateral offset of the string passageway 112 in relation to the centre C of the part 110, that is in relation to the axis of rotation of the cutting head, it is possible to give the curved bearing zone 120 a radius of curvature which is much greater than that which could be achieved, as in the prior art, with a string passageway extending geometrically from the centre C.

Specifically, in the case of the prior art, knowing that the central zone of the cutting head is necessarily occupied by the shaft, very little room is available in the axial direction for implementing on the one hand the locking of the strand of cutting string, and on the other hand the curved bearing surface.

On the contrary, due to the arrangement of the invention, a much greater radius of curvature R can be envisaged and this can (at least locally) be equal to or even significantly greater than the distance D.

It will be noted here that the curved bearing zone may have any curved geometric shape required (circular, with circular sectors of different radius, elliptical, parabolic, etc.). It will be understood in particular that there may be one or more constant radii of curvature, and/or one radius of curvature varying continuously.

Due to a less pronounced curvature of the curved bearing zone, the actions are very considerably reduced as is the fatigue of the strand of string, because the material of the latter is much less stressed, and this is particularly important with modern cutting strings comprising arrangements (teeth, etc.) intended to facilitate cutting, and/or arrangements (recesses, protrusions, etc) intended to reduce noise during rotation, and/or zones of different materials (filled polyamides, etc.) intended for example to increase wear resistance.

The disc-shaped part 110 also comprises, on a section of the string strand passageway zone 112, a cavity 114 intended to receive a string locking shoe that will be described later. For the moment, mention will be made here that this cavity opens out onto the string passageway zone and comprises on the opposite side a vertical, unbevelled surface oriented at an angle relative to the axis A of the string passageway 112, and also comprises, adjacent to the extremity of the surface 116 furthest away from the axis A, a blind recess 117 intended for the wedging of a shoe pressure spring as will be seen in detail later.

Also represented in Figure 4 are holes 118 suitable for being traversed by screws or studs for the assembly of the part 110 with one or more other disc-shaped parts, designed in similar manner.

Finally, Figure 4 shows that the part 110 comprises, with a symmetry of revolution of 180° relative to the arrangements described above, some second passageway, bearing and locking arrangements for a second strand of string, these arrangements being indicated by the same reference marks plus a "prime" mark.

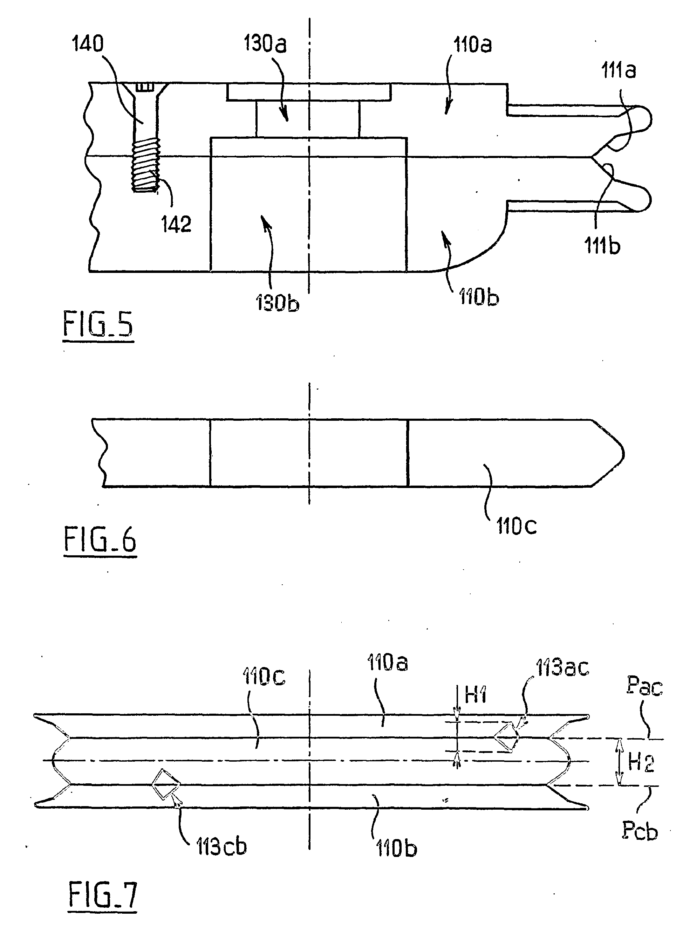

Figure 5 shows in greater detail a cutting head implemented by assembling a first disc-shaped part 110a, comprising the arrangements as illustrated in figure 4, and a second disc-shaped part 110b comprising corresponding arrangements, with a mirror symmetry, such that all these arrangements are placed on top of their counterparts belonging to the other part 110a during assembly.

It is understood that such an assembly forms string strand passageways in regular lozenge shape. By using strands of cutting string of generally square cross-section and slightly smaller than the cross-section of the passageways formed in the head, these passageways retain the strands in an inclination such that it is a ridge of each string strand which will constitute a leading zone for cutting, to thus improve cutting efficiency.

It will be observed however that such a head may be used with cutting string strands of any cross-section, provided that they can be engaged without being trapped in a string passageway.

It is understood that, on the basis of the arrangements as described with reference to Figure 4, Figure 5 implements a cutting head with two strings situated at the same level in vertical direction and exiting from the head in an oblique direction relative to a strictly radial direction, in two diametrically opposed places.

Figure 6 illustrates in elevation another disc-shaped part 110c, constituting a third intermediate part of the head.

This part 110c comprises two sets of arrangements like those represented in Figure 4, respectively on each of its two faces, with preferably a mutual offset of 90°. One of these sets of arrangements forms counterpart arrangements of those of the part 110a, whereas the other of these sets of arrangements forms counterpart arrangements of those of the part 110b. As a corollary, to fit the intermediate part 110c, the arrangements of the parts 110a and 110b are mutually offset at a 90° angle.

It is understood that, in this way, a cutting head is implemented comprising an upper level with two string strands with diametrically opposed outlets, and a lower level with two other string strands with diametrically opposed outlets also, but offset by 90° in relation to the first ones.

This cutting head is illustrated in elevation in Figure 7. Shown in this figure are two openings, respectively 113ac and 113cb, offset at an angle of 90° and belonging respectively to the two levels, the openings for the outlet of the strings not having been represented in this figure.

It has been observed that such an arrangement of strings, with two levels, advantageously provided chopping of the cut plant material when the distance between the planes of the string levels was well chosen. More particularly, and still with reference to Figure 7, it has been observed that, if the distance H2 between the respective planes Pab and Pbc of the two string levels is equal to or greater than approximately 1.8 times the height H1 of a string (corresponding substantially to the height of its passageway), and preferably equal to or less than approximately 5 times this same height H1, then particularly satisfactory chopping is obtained. For example, with a string of square cross-section with a side length of 4 mm, that is a diagonal measuring approximately 5.6 mm, the height offset between the two cutting planes is greater than approximately 10 mm.

In such a configuration, chopping is equally favoured if, as described above, the string outlets are offset at an angle to one another. For preference, and as also described, this offset is such that, in circumferential direction, the string outlets are regularly spaced.

However, irregularly spaced string outlets (which is obtained in particular if the angular offset between the arrangements of the upper level and those of the lower level is not 90°), a satisfactory result is also obtained.

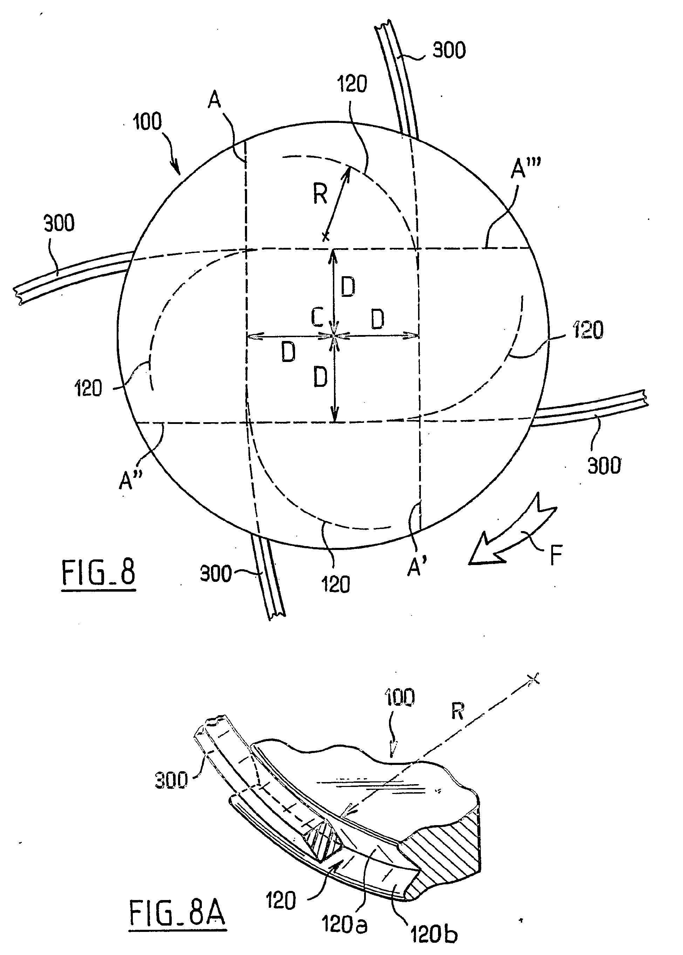

Figure 8 represents a schematic view from above of the cutting head in Figure 7. Installed in this cutting head are three strands of string 300 which project at the string outlet 115 and which stop substantially at the openings 113. Also represented in this figure are the curved bearing surfaces 120 for the strands of string. The direction of rotation of the head is illustrated by the arrow F.

In addition, it is understood in the light of the foregoing that by using two intermediate parts of the type of part 110c, or more, and two terminal parts 110a and 110, a head can be implemented with any number of levels.

For example, by using an intermediate part that has its upper and lower arrangements mutually offset by 60°, and by providing two of such intermediate parts between the upper and lower parts 110a, 110b, a three-level cutting head is implemented with string outlets regularly distributed in a circumferential direction.

Figure 8A illustrates in perspective the curved bearing surface 120 formed by the head for one individual strand of string 300, represented by a part of its length.

It is understood that such a curved bearing surface is formed by the curved bearing zones 120a, 120b of the two adjacent disc-shaped parts 110a and 110b (in the case of a version such as the one in Figure 5), which in turn belong to the 45° bevels 111'' of the respective parts.

This curved bearing surface therefore presents a V-shaped profile with a 90° bottom angle, that is a profile suited to the cross-section of the string 300 at the outlet of its passageway. Such a bearing surface is therefore used to retain the string in its optimal cutting orientation at all times, and in particular when, under the effect of resistance from the plants, it comes to rest against the bearing surface 120.

Naturally, the profile of the curved bearing surface will be adapted according to the type of cross-section of the string. In this regard, even in the case of a string of circular cross-section, it can be envisaged that the string rests on a curved bearing zone having a recessed circular profile. This minimizes the fatigue of the string and increases the cutting efficiency by stabilizing its trajectory in the cutting plane when it comes to rest against the said zone. In particular, it avoids wasting kinetic energy in a direction transverse to the direction of cutting (vertical direction in use).

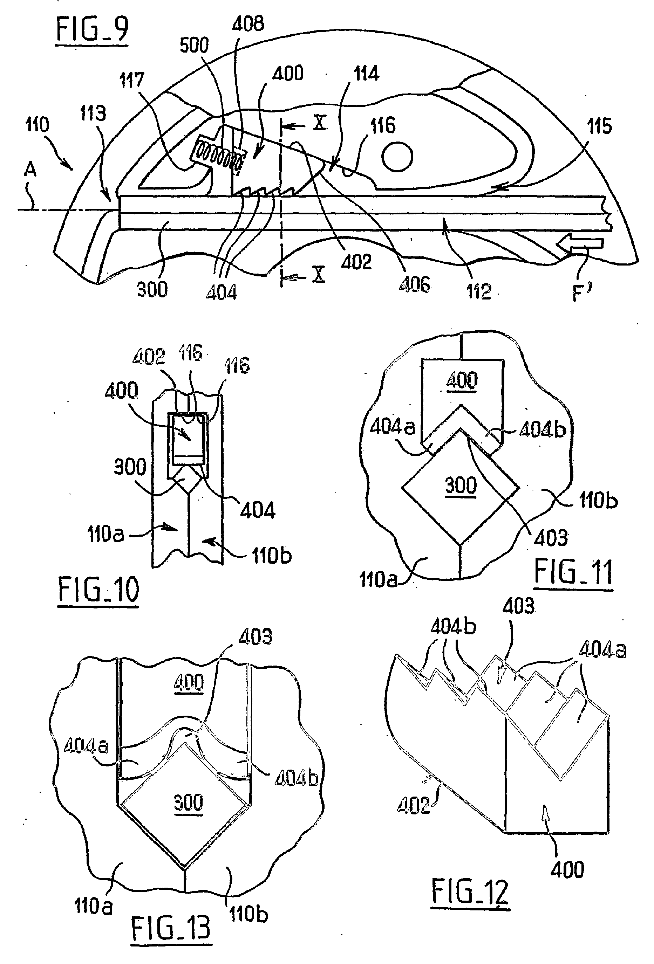

Figures 9 and 10 illustrate the string locking mechanism, mounted inside a pair of disc-shaped parts (parts 110a and 110b in the basic form of implementation with a single cutting level). This mechanism comprises a shoe 400 placed in a housing defined by the cavity 114 formed in one of the disc-shaped parts (see Figure 4), here 110a, and by the counterpart cavity defined in the other disc-shaped part, here 110b, which is juxtaposed to it.

This shoe 400 possesses a first face possessing a plurality of teeth 404 extending transversely to the axis A of the string passageway 112 and intended to bite into the cutting string 300 engaged in the said passageway 112, and an opposite face 402 extending at an oblique angle relative to the abovementioned first face and intended to rest against the rear face of its housing, defined by the faces 116 of the two disc-shaped parts.

A pressure spring 500 acts between a spring seat defined jointly by the blind recesses 117 of the two disc-shaped parts, and a recess 408 formed in a pressure region of the shoe 400, situated in the region of greatest height of the said shoe.

On the opposite side (front side), the shoe possesses an inclined section 406 directed at an oblique angle towards the top from the tooth 404 situated furthest forward.

The cutting strand of string 300, pre-cut to the required length, is engaged in its passageway 112 from its outlet opening 115, in the direction of the arrow F' in Figure 9. Thus, it pushes back the shoe 400 against the (moderate) force of the spring 500, the shoe thus being able to rise by sliding against the rear face 116, 116 of its housing by the amount necessary to let the strand of string pass. The strand of string is pushed preferably until its left-hand extremity in Figure 9 reaches the region of the opening 113, as illustrated in this same figure. The operator can thus ensure that the string has been fully engaged beyond the locking shoe. It will be noted here that the inclined front section 406 guides the strand of string so that it passes correctly under the shoe 400, on the toothed side.

It is well understood that, as soon as a pulling force is exerted on the strand of string in the direction opposite to the arrow F', which is typically the case when the device is working, by friction and impacts against the plants, the shoe 400, which actes as a one-way lock, tends to exert on the strand of string 300, through its teeth 404, a retention force by gripping which is all the greater as the pulling force increases, this being so due to the inclined face 116, 116 of the housing, providing a wedge effect in cooperation with the face 402 of the shoe.

Particular advantages of such a locking mechanism with sliding shoe, in particular when compared with the known mechanisms with toothed cam or similar, reside on the one hand in that the retention force exerted on the strand of string by the shoe, supported extremely firmly and solidly by the rear surface 116, 116 of the shoe housing 114, 114, can be extremely strong and on the other hand in that the extent, according to the length of the string 300, over which the teeth 404 cooperate with the string, can be much greater than with a known cam mechanism.

Other advantages are (i) that the strand of string can be easily inserted into the passageway through the opening 115 and easily removed from the passageway through the opposite opening 113, both being located at the periphery of the head, and (ii) that the locking mechanism can be placed between the passageway 112 and the periphery of the head, i.e. without interfering with the central region of the head in which the arrangements (recess for shaft and nut) for mounting the head on the cutting device are to be positioned.

In the embodiment in Figures 9 and 10, and as is shown in Figure 10, the teeth 404 retaining the strand of string extend in a rectilinear manner in a direction transverse to the string.

According to another advantageous aspect, it can be envisaged that the string strand locking element (moreover whether it is a sliding shoe, a pivoting cam, or any other gripping element), is shaped in a manner to improve the retention of the string.

Thus, while in Figures 9 and 10 the cooperation between the teeth 404 and the string occurs simply at the level of the string ridge situated opposite the shoe, it is envisaged, as illustrated in Figures 11 and 12, that the teeth adopt a profile suited to the shape of the string. In these figures, there are two series of teeth 404a, 404b oriented at 90° to one another to form a profile comprising a recess 403. As a result, each series of teeth may cooperate with a whole face, or a substantial part of such a face, of a string in the case in point of a square cross-section, and the extent of the cooperation between the shoe and the string to retain the latter is further increased.

More generally, any recessed profile can be envisaged at the level of the teeth of the shoe 400 to better receive the string, irrespective of the shape of the cross-section of the latter.

Thus Figure 13 illustrates the case in which the region of the teeth of the shoe 400 has a profile with a central curved recess, and two series of teeth 404a, 404b of convex profile either side of this recess. In this case, it is primarily the double row of contact between the teeth and the string which increases the gripping force.

It will be observed here that the locking shoes in Figures 11, 12 and 13 have an improved string retention efficiency not only with a string of square cross-section disposed as a lozenge, as described, but also with many other cross-sections of string, and in particular a circular cross-section.

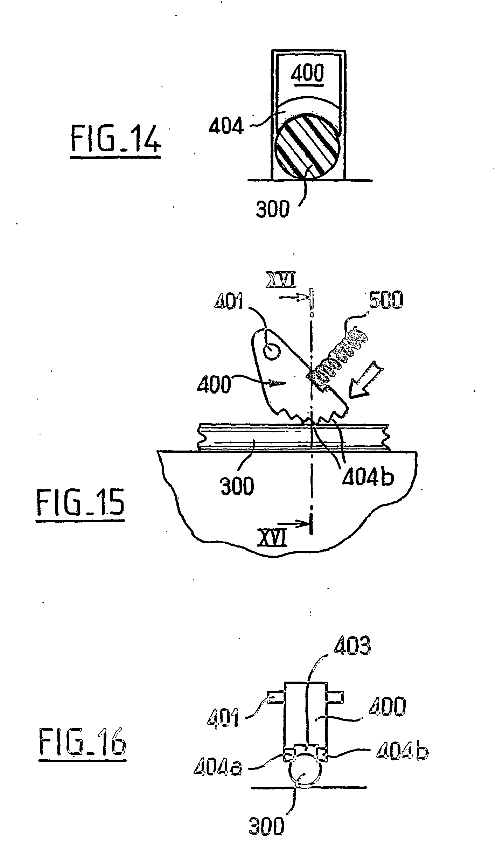

Figure 14 for its part illustrates the case in which, with a cutting string 300 of circular cross-section, use is made of a row of teeth 404 having a convexity suitable for receiving the string, with a radius of curvature of the string and a radius of curvature of the profile of the teeth preferably similar to one another.

It is understood that the use of the string locking element with a recessed profile zone of contact with the string applies not only to the case of a shoe, but also to the case of an element of another type such as a cam.

Thus Figures 15 and 16 illustrate the locking of a cutting string 300, in this case of circular cross-section, with the aid of a cam 400 mounted on a pivot 401 and acted upon by a pressure spring 500. The teeth 404 are disposed on a circular sector eccentric in relation to the axis of rotation defined by the pivot 401.

It is observed in this embodiment that the cam has two rows of teeth 404a, 404b generally straight in the extension of one another (see Figure 16), these two rows being separated by a central groove 403. Such a profile of teeth here further improves the locking of the string with many shapes of string.

Naturally, the present invention is not limited to the embodiments described and represented, and those skilled in the art will be able to provide many variants and modifications.

Moreover, it is understood that the different aspects of the new cutting head described in the foregoing may most frequently be implemented independently of one another or combined in different manners.

## Claims

1. A cutting head for a brush cutter, edge trimmer or similar, of the type comprising a plurality of string outlets (115) for a plurality of cutting strings (300), **characterized in that** the axes of the cutting string outlets are distributed in at least two planes (Pac, Pcb) mutually spaced by a distance (H2) greater than or equal to approximately 1.8 times the height (H1) of each string, **in that** in each plane the respective string outlets are at the same level, and **in that** in all planes the direction of rotation of the head is the same.

2. A cutting head according to Claim 1, **characterized in that** the at least two planes (Pac, Pcb) are mutually spaced by a distance (H2) less than or equal to approximately 5 times the height (H1) of each string.

3. A cutting head according to one of Claims 1 and 2, **characterized in that** in the peripheral direction of the head, the strings (300) exiting in a first plane (Pac) are alternated with the strings exiting in a second plane (Pcb) adjacent to the first.

4. A cutting head according to Claim 3, **characterized in that** in the peripheral direction of the head, the strings (300) exit the head in a regularly distributed manner.

5. A cutting head according to Claim 4, **characterized in that** two strings (300) are provided exiting in a first plane (Pac) in diametrically opposed regions, and two strings exiting in a second plane (Pcb) adjacent to the first, in diametrically opposed regions also, and **in that** the string outlets (115) are distributed approximately every 90° in the peripheral direction.

6. A cutting head according to one of Claims 1 to 5, **characterized in that** each string (300) has a ridge, and **in that** the head comprises means (115, 120) for maintaining each string in an orientation such that its cutting ridge is in a position to lead the attack on the plants.

7. A cutting head according to Claim 6, **characterized in that** each string (300) has a substantially square section and is oriented with two opposite ridges situated substantially in the plane (Pac; Pcb) containing the axis of the corresponding string outlet (115).

8. A cutting head according to one of Claims 1 to 7, **characterized in that** the head is implemented by assembling parts (110) of general disc shape defining string semi-channels (120) opposite one another and suitable for together forming string channels concealed in the head.

9. A cutting head according to Claim 8, **characterized in that** the spacing (H2) between the planes (Pac, Pcb) of the string outlets is defined by the thickness of an intermediate part (110c) comprising on one face semi-channels for the strings of an upper plane and on an opposite face semi-channels for the strings of a lower plane.

10. A vegetation cutting device such as a brush cutter, edge trimmer or similar, **characterized in that** it comprises a cutting head (100) according to one of Claims 1 to 9 and a motor suitable for driving in rotation said cutting head.

## Patentansprüche

1. Schneidkopf für einen Buschschneider, Kantentrimmer oder dergleichen, von solcher Bauart, die mehrere Fadenauslässe (115) für mehrere Schneidfäden (300) umfasst, **dadurch gekennzeichnet, dass** die Achsen der Schneidfadenauslässe auf mindestens zwei Ebenen (Pac, Pcb) verteilt sind, die in einem Abstand (H2) von ungefähr gleich oder größer dem 1,8-fachen der Höhe (H1) jedes Fadens zueinander liegen, dass sich die jeweiligen Fadenauslässe in jeder Ebene auf dem gleichen Niveau befinden und dass die Drehrichtung des Kopfes in allen Ebenen die gleiche ist.

2. Schneidkopf nach Anspruch 1, **dadurch gekennzeichnet, dass** die mindestens zwei Ebenen (Pac, Pcb) in einem Abstand (H2) zueinander liegen, der ungefähr gleich oder kleiner dem 5-fachen der Höhe (H1) jedes Fadens ist.

3. Schneidkopf nach einem der Ansprüche 1 und 2, **dadurch gekennzeichnet, dass** diejenigen Fäden (300), die in einer ersten Ebene (Pac) austreten, sich in der Umfangsrichtung des Kopfes mit denjenigen Fäden, die in einer zur ersten Ebene benachbarten zweiten Ebene (Pcb) austreten, abwechseln.

4. Schneidkopf nach Anspruch 3, **dadurch gekennzeichnet, dass** die Fäden (300) in der Kopfumfangsrichtung in regelmäßigen Abständen aus dem Kopf austreten.

5. Schneidkopf nach Anspruch 4, **dadurch gekennzeichnet, dass** zwei Fäden (300) in einer ersten Ebene (Pac) in diametral entgegengesetzten Bereichen austreten und zwei Fäden in einer der ersten Ebene benachbarten zweiten Ebene (Pcb) ebenfalls in diametral entgegengesetzten Bereichen austreten, und dass die Fadenauslässe (115) in der Umfangsrichtung um ungefähr alle 90° verteilt sind.

6. Schneidkopf nach einem der Ansprüche 1 bis 5, **dadurch gekennzeichnet, dass** jeder Faden (300) eine Kante besitzt und dass der Kopf die Mittel (115, 120) zum Halten jedes Fadens in einer solchen Ausrichtung umfasst, dass sich dessen Schneidkante in einer Stellung befindet, in der die Führung beim Abtragen der Pflanzen übernommen wird.

7. Schneidkopf nach Anspruch 6, **dadurch gekennzeichnet, dass** jeder Faden (300) einen im Wesentlichen viereckigen Querschnitt aufweist und so ausgerichtet ist, dass zwei einander gegenüberliegende Kanten im Wesentlichen in der Ebene (Pac; Pcb) liegen, die die Achse des entsprechenden Fadenauslasses (115) enthält.

8. Schneidkopf nach einem der Ansprüche 1 bis 7, **dadurch gekennzeichnet, dass** der Kopf durch zusammenzufügende Teile (110) mit im Wesentlichen Scheibenform ausgebildet ist, die halbe Fadenkanäle (120) festlegen, welche einander gegenüberliegen und dazu geeignet sind, zusammen in dem Kopf verborgene Fadenkanäle zu bilden.

9. Schneidkopf nach Anspruch 8, **dadurch gekennzeichnet, dass** der Zwischenraum (H2) zwischen den Ebenen (Pac, Pcb) der Fadenauslässe durch die Dicke eines Zwischenteils (110c) definiert ist, das auf einer Seite halbe Kanäle für die Fäden einer oberen Ebene und auf einer gegenüberliegenden Seite halbe Kanäle für die Fäden einer unteren Ebene umfasst.

10. Vegetationsschneidvorrichtung wie beispielsweise ein Buschschneider, Kantentrimmer oder dergleichen, **dadurch gekennzeichnet, dass** sie einen Schneidkopf (100) nach einem der Ansprüche 1 bis 9 und einen Motor, der zum Drehantreiben des Schneidkopfs geeignet ist, umfasst.

## Revendications

1. Tête de coupe pour débrousailleuse, coupe-bordures ou analogue, du type comprenant une pluralité de sorties de fil (115) pour une pluralité de fils de coupe (300), **caractérisée en ce que** les axes des sorties de fils de coupe sont répartis dans au moins deux plans (Pac, Pcb) espacés mutuellement d'une distance (H2) supérieure ou égale à environ 1,8 fois la hauteur (H1) de chaque fil, **en ce que** dans chaque plan, les axes des sorties de fils de coupe se situent à un même niveau, et **en ce que** dans tous les plans le sens de rotation de la tête est le même.

2. Tête de coupe selon la revendication 1, **caractérisée en ce que** les deux plans au moins (Pac, Pcb) sont espacés mutuellement d'une distance (H2) inférieure ou égale à environ 5 fois la hauteur (H1) de chaque fil.

3. Tête de coupe selon l'une des revendications 1 et 2, **caractérisée en ce que** dans la direction périphérique de la tête, les fils (300) sortant dans un premier plan (Pac) sont alternés avec les fils sortant dans un deuxième plan (Pcb) adjacent au premier.

4. Tête de coupe selon la revendication 3, **caractérisée en ce que** dans la direction périphérique de la tête, les fils (300) sortent de la tête de façon régulièrement répartie.

5. Tête de coupe selon la revendication 4, **caractérisée en ce qu'**il est prévu deux fils (300) sortant dans un premier plan (Pac) dans des régions diamétralement opposées, et deux fils sortant dans un deuxième plan (Pcb) adjacent au premier, dans des régions diamétralement opposées également, et **en ce que** les sorties de fil (115) sont réparties tous les 90° environ en direction périphérique.

6. Tête de coupe selon l'une des revendications 1 à 5, **caractérisée en ce que** chaque fil (300) présente une arête, et **en ce que** la tête comporte des moyens (115, 120) pour maintenir chaque fil dans une orientation telle que son arête de coupe soit dans une position d'attaque des végétaux.

7. Tête de coupe selon la revendication 6, **caractérisée en ce que** chaque fil (300) présente une section sensiblement carrée et est orienté avec deux arêtes opposées situées sensiblement dans le plan (Pac ; Pcb) contenant l'axe de la sortie de fil (115) correspondante.

8. Tête de coupe selon l'une des revendications 1 à 7, **caractérisée en ce que** la tête est réalisée par assemblage de pièces (110) en forme générale de disque définissant des demi-passages (120) de fil en vis-à-vis les uns des autres et aptes à former ensemble des passages de fil noyés dans la tête.

9. Tête de coupe selon la revendication 8, **caractérisée en ce que** l'espacement (H2) entre les plans (Pac, Pcb) des sorties de fils est défini par l'épaisseur d'une pièce intermédiaire (110c) comportant sur une face des demi-passages pour les fils d'un plan supérieur et sur une face opposée des demi-passages pour les fils d'un plan inférieur.

10. Appareil de coupe tel que débrousailleuse, coupe-bordures ou analogue, **caractérisé en ce qu'**il comprend une tête de coupe (100) selon l'une des revendications 1 à 9 et un moteur apte à entraîner ladite tête de coupe.
